(19) **Europäisches Patentamt / European Patent Office / Office européen des brevets**

(11) **EP 1 982 217 B1**

(12) **FASCICULE DE BREVET EUROPEEN**

(45) Date de publication et mention
de la délivrance du brevet:
**02.09.2015 Bulletin 2015/36**

(21) Numéro de dépôt: **07704387.5**

(22) Date de dépôt: **06.02.2007**

(51) Int Cl.:
*G02B 5/20* (2006.01)     *G03F 7/00* (2006.01)

(86) Numéro de dépôt international:
**PCT/EP2007/051109**

(87) Numéro de publication internationale:
**WO 2007/090828 (16.08.2007 Gazette 2007/33)**

(54) **RÉALISATION DE CAVITÉS POUVANT ÊTRE REMPLIES PAR UN MATÉRIAU FLUIDIQUE DANS UN COMPOSÉ MICROTECHNOLOGIQUE OPTIQUE**

HERSTELLUNG VON HOHLRÄUMEN, DIE MIT EINEM FLUIDMATERIAL IN EINER OPTISCHEN MIKROTECHNOLOGISCHEN KOMPONENTE GEFÜLLT WERDEN KÖNNEN

PRODUCTION OF CAVITIES THAT CAN BE FILLED WITH A FLUID MATERIAL IN AN OPTICAL MICROTECHNOLOGICAL COMPONENT

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **09.02.2006 FR 0650466**

(43) Date de publication de la demande:
**22.10.2008 Bulletin 2008/43**

(73) Titulaire: **Commissariat à l'Énergie Atomique et aux Énergies Alternatives**
**75015 Paris (FR)**

(72) Inventeurs:
• **SOURIAU, Jean-Charles**
**F-38120 Saint Egreve (FR)**
• **SILLON, Nicolas**
**F-38600 Fontaine (FR)**
• **JOLY, Jean-Pierre**
**F-38120 Saint Egreve (FR)**

(74) Mandataire: **Ilgart, Jean-Christophe**
**BREVALEX**
**95, rue d'Amsterdam**
**75378 Paris Cedex 8 (FR)**

(56) Documents cités:
EP-A- 0 977 076          US-A- 4 441 791
US-A- 4 989 226          US-A- 5 417 801
US-A1- 2003 076 609

## Description

## DOMAINE TECHNIQUE

L'invention se rapporte à la fabrication de films contenant des cavités, de profondeur typiquement inférieure à 100 $\mu$m, séparées par des parois de faible épaisseur comparée à leur hauteur, typiquement inférieure à 2 $\mu$m, dans lesquelles un fluide fonctionnel peut être introduit. Une application particulière concerne les dispositifs « optiques » où le substrat est transparent et le fluide fonctionnel possède des qualités optiques, par exemple un liquide photosensible, un liquide d'indice optique prédéfini, des cristaux liquides, ....

Plus généralement, l'invention se rapporte à un procédé microtechnologique de fabrication de cavités avec des parois concaves ou arrondies, et à des dispositifs ainsi obtenus.

## ÉTAT DE LA TECHNIQUE ANTÉRIEURE

Dans les années 1990, l'incorporation de molécules photochromiques dans les verres de lunettes a pris un essor important. Les verres ainsi obtenus ont la propriété de s'assombrir sous l'action des ultraviolets (UV) qui les atteignent. Le photochromisme des verres organiques est obtenu par l'introduction dans la matière de composés photosensibles qui, sous l'action de radiations UV spécifiques, subissent un changement de leur structure qui modifie leurs propriétés d'absorption de la lumière visible. Plusieurs familles de molécules sont utilisées, comme les oxazines, les pyranes ou les fulgides, et les modifications de structure subies par ces molécules peuvent être de plusieurs ordres (notamment : ruptures et/ou formations de liaisons, isomérisations cis/trans, etc.). Pour toutes ces modifications, les durées de transition sont assez longues, et il faut compter quelques dizaines de secondes pour activer les molécules et quelques centaines de secondes pour les désactiver ; ces délais n'assurent pas aujourd'hui un confort et une sécurité optiques maximales.

Pour améliorer ces verres, les fabricants regardent donc d'autres matériaux photochromiques, et en particulier des matériaux en phase liquide, ce qui réduirait notablement les durées de transition. Cependant, l'utilisation de matériaux à l'état fluidique nécessite une structure de maintien étanche du fluide, cette structure comportant des parois (soit des espaceurs, soit des parois pleines) définissant des cavités, fermées ou communicantes.

De plus, les propriétés optiques doivent être optimisées dans chacun des composantes et pour l'ensemble. Or les parois peuvent créer des perturbations optiques comme de la diffusion et/ou de la diffraction de la lumière. Il serait souhaitable de fabriquer des parois ayant un indice optique le plus proche possible de celui du fluide de remplissage des cavités : une première solution immédiate pour l'homme du métier est de fabriquer des parois avec une résine photosensible. Toutefois, à ce jour, il n'a pas été identifié de résines commerciales qui soient susceptibles de remplir toutes les conditions mentionnées ci-dessus.

Se pose donc le problème de réaliser des parois adaptées de façon à limiter ces perturbations et en particulier de faire en sorte qu'elles ne soient pas visibles par l'oeil et présentent des propriétés optiques limitant les phénomènes de diffusion et/ou diffraction de la lumière visible traversant les structures. US 2003/0076609 divulgue un procédé et un dispositif de l'art antérieur.

## EXPOSÉ DE L'INVENTION

L'invention se propose, parmi autres avantages, de fournir un procédé de fabrication permettant de réaliser un film comprenant des cavités dont les parois ne diminuent pas, ou peu, les qualités optiques du film et d'un fluide contenu dans les cavités.

Plus généralement, le procédé selon l'invention permet de fabriquer sur un substrat des parois de cavités dont le rapport hauteur (de cavité, perpendiculairement au substrat) sur épaisseur (de paroi, parallèlement au substrat) est élevé, et dont la forme présente une concavité contrôlée. En particulier, pour une paroi arrondie, de hauteur H, d'épaisseur $\ell$ à ses extrémités et e en son centre, les rapports suivants sont préconisés : $2 \le H/\ell \le 10$ et $\ell/10 \le e \le \ell/2$. Plus généralement, la flèche de la concavité est de l'ordre du quart de l'épaisseur de la paroi.

Selon l'invention, les parois sont réalisées par gravure plasma d'un matériau, mis à disposition sous forme de structure empilée, à travers un masque dit « couche mince ». Ce procédé permet d'ouvrir un large choix de matériaux pour réaliser les parois, tout en assurant la fabrication de motifs de petites tailles et de hauteur suffisante. En outre, ce type de gravure, bien qu'anisotrope, permet d'arrondir les bords des motifs gravés, et donc de former des parois dont les propriétés optiques sont optimisées.

Les parois peuvent être formées au sein d'une couche homogène de matériau, auquel cas la gravure est arrêtée une fois la profondeur de cavité atteinte, de sorte qu'on obtient une couche de matériau présentant des cavités convexes. Avantageusement, la couche de matériau est transparente ou opaque au rayonnement choisi pour l'utilisation future du film, et les parois des cavités forment un réseau, éventuellement non fermé, de hauteur de l'ordre de 5 à 30 $\mu$m.

Les parois peuvent également traverser entièrement une couche de matériau, par exemple transparent ou absorbant la lumière, ou plus généralement le rayonnement d'intérêt, déposée sur un support. Avantageusement, le support, transparent, est revêtu d'une couche d'arrêt de sorte que la gravure plasma est stoppée à ce niveau. La couche d'arrêt est avantageusement d'une épaisseur de 10 à 100 nm ; elle peut ou non être transparente. Cette couche d'arrêt peut de préférence être ensuite gravée pour mettre à nu le support en fond de cavité et optimiser les propriété optiques. La profondeur des cavités, qui peuvent être séparées l'une de l'autre par des parois formant un réseau fermé ou communiquer partiellement entre elles par des parois sous forme d'éléments d'espacement, est alors égale à la somme des épaisseurs de la couche de matériau gravée au plasma et de la couche d'arrêt.

Une fois que l'on a obtenu une structure empilée munie de saillies optiquement optimisées, les cavités sont remplies de fluide approprié avant d'être fermées par dépôt d'un film sur la partie extrême des saillies.

Afin de faciliter le procédé de gravure, le support du dispositif est solidarisé à un substrat rigide, préférentiellement en matériau couramment utilisé en microélectronique comme les semi-conducteurs (notamment le silicium) ou les verres. La gravure est de préférence effectuée à travers un masque fine couche, par exemple réalisé par dépôt d'une couche mince de masquage, revêtement d'une résine, insolation et développement de la résine, puis gravure de la couche de masquage.

L'invention a. également trait à un dispositif ou film ainsi obtenu, dont les propriétés optiques sont avantageuses.

## BRÈVE DESCRIPTION DES DESSINS

D'autres caractéristiques et avantages de l'invention, ressortiront plus clairement à la lecture de la description suivante et en référence aux dessins annexés, donnés à titre uniquement illustratif et nullement limitatifs.

Les figures 1A à 1C montrent différents profiles de paroi réalisés avec des paramètre de gravure différents.
Les figures 2A à 2C illustrent un procédé de réalisation d'un masque préféré selon l'invention.
Les figures 3A à 3D montrent un premier mode de réalisation du procédé selon l'invention.
La figure 4 schématise la formation « d'herbes » par une gravure utilisée selon l'invention.
Les figures 5A à 5G montrent un autre mode de réalisation préféré du procédé selon l'invention.

## EXPOSÉ DÉTAILLÉ DE MODES DE RÉALISATION PARTICULIERS

Bien que précédemment présenté pour une application à des verres de lunettes, le procédé selon l'invention n'y est pas restreint. En particulier, les dispositifs décrits ci-après peuvent être des films polariseurs passifs, des écrans de visualisation à base de cristaux liquides, des écrans utilisant un liquide comme la technologie dite « encre électronique », ou tout autre film ou couche comprenant une pluralité de cavités, communiquant entre elles ou non, remplies d'un fluide de propriété optique déterminée en fonction de l'application visée, et dont les parois des cavités ne devraient pas dégrader les qualités optiques de la couche.

Le film selon l'invention, avantageusement transparent et comprenant des cavités dans lesquelles il est possible de piéger un liquide photochromique, peut ainsi être reporté sur un verre de lunette ou tout autre support, selon un procédé connu comme un collage. Dans le procédé et le dispositif selon l'invention, des parois de cavités sont réalisées dans un matériau sélectionné et sur un substrat, avantageusement transparent; un deuxième substrat est destiné à recouvrir les parois, de façon à former des cavités, communiquant entre elles ou non, qui peuvent contenir de façon étanche un fluide de qualités optiques, par exemple un fluide photosensible ou thermosensible ou encore un liquide d'indice optique précis. Il est par ailleurs possible que des cavités ne communiquant pas entre elles contiennent des fluides différents, comme par exemple des liquides dont l'indice diffère.

De fait, suivant l'application envisagée, il peut être intéressant d'avoir une épaisseur importante du fluide fonctionnel, par exemple pour absorber le plus de lumière possible dans le cas de matériau photochrome. Or, plus la profondeur des cavités est importante, plus la réalisation technologique de leurs parois pose des problèmes, et nécessite un compromis avec leur épaisseur. Or, à titre d'exemple, les parois peuvent présenter des hauteurs de plusieurs microns (typiquement 5 à 20 $\mu$m), et il est souhaitable, afin de minimiser les phénomènes optiques parasites qu'elles engendrent, que leur épaisseur soit faible, de l'ordre du micron.

Selon l'invention, les parois sont gravées par gravure plasma de la couche, ou l'empilement de couches, de matériau composant la paroi. Ce procédé permet de réaliser des parois de hauteur mentionnée ci-dessus, et d'épaisseur inférieure à 2 $\mu$m. En outre, la plupart des polymères se gravent par des procédés de plasma avec de l'oxygène ; plus généralement, ce type de gravure est adapté pour la plupart des matériaux considérés pour la fabrication des parois.

De plus, bien qu'anisotrope, la gravure plasma permet d'obtenir un profil arrondi vers l'intérieur des parois. En effet, une réaction chimique entre les espèces ionisées et/ou un bombardement des espèces ionisées rebondissant sur le fond de cavité et venant ensuite frapper les parois (sensiblement orthogonales au fond) avec un angle d'incidence rasant entraîne un amincissement local de la paroi. Cet effet, habituellement considéré comme un inconvénient, est recherché dans la présente invention : une forme légèrement arrondie atténue les phénomènes de diffraction optique. En particulier, les parois sont biconcaves, ce qui permet en outre un amincissement de la paroi au niveau de la flèche, par exemple en son centre, par rapport aux parties d'extrémité.

De plus, selon l'invention, il est possible de maîtriser la concavité résultant de la gravure. Par exemple, le profil des parois dans un équipement de gravure RIE (« *Reactive Ion Etching* ») peut être contrôlé de plusieurs façons :

- en modifiant les pressions des gaz dans la chambre de gravure, une haute pression favorisant l'isotropie tandis qu'une basse pression favorise l'anisotropie;
- en modifiant la polarisation du substrat et par conséquent l'accélération des ions, une tension élevée augmentant l'effet mécanique de la gravure et donc l'anisotropie.

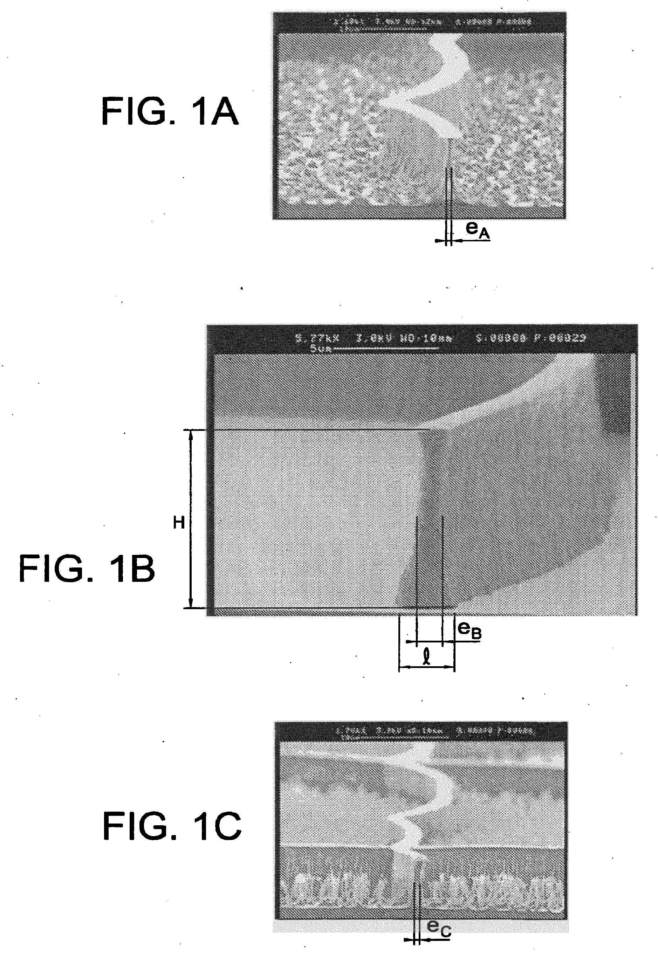

Par exemple, en figures 1 sont illustrés trois profils de parois obtenus par gravure RIE « Nextral 330 » pour un masque de même largeur 4 $\mu$m respectivement à 100 mTorr (figure 1A), 50 mTorr (figure 1B) et 10 mTorr (figure 1C) d'oxygène à 350 mW. La flèche est localisée à différentes hauteurs, et l'épaisseur des parois y varie selon les conditions de pression : $e_A < 1$ $\mu$m, $e_B \approx 1$ $\mu$m et $e_C \approx 2$ $\mu$m.

Plus généralement, pour une hauteur H de paroi, une épaisseur $\ell$ aux extrémités et e au niveau de la flèche, on choisit selon l'invention les paramètres de gravure pour obtenir :
$$2 \leq \frac{H}{\ell} \leq 10 \quad \text{et}$$
$$\frac{\ell}{10} \leq e \leq \frac{\ell}{2}.$$

La gravure plasma est effectuée à travers un masque dit « couche mince » préalablement déposé sur la couche de matériau composant la paroi. Le masque est fabriqué de préférence par dépôt d'un matériau sélectif à la gravure plasma, lithographie et gravure.

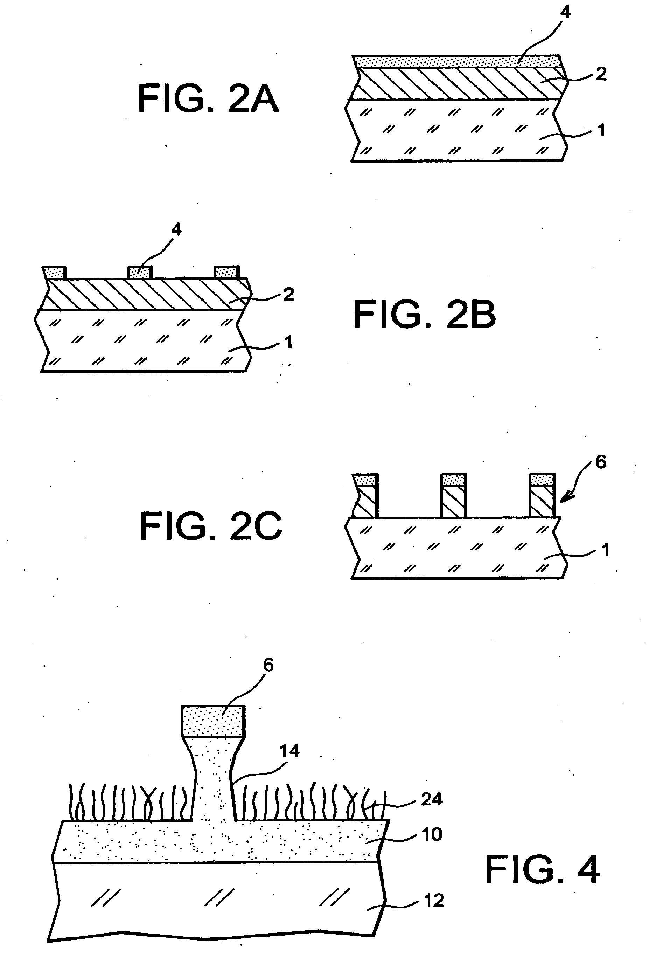

En particulier, tel qu'illustré en figures 2, le mode de réalisation préféré du masque comprend le dépôt, sur un support 1, d'une couche de masquage 2 pour la gravure, obtenue par exemple par pulvérisation ou évaporation, qui est composée d'un matériau sélectif par rapport à la gravure plasma des parois; par exemple, il s'agit d'un métal (Al, Ti, Cr,... ) ou d'un alliage (Al/Si, Al/Cu,...) ou d'une céramique (Cr/SiO,...) ou d'une couche transparente en $SiO_2$, $SiO_x$, SiOC, SiN ou ITO, dont l'épaisseur est typiquement comprise entre 0,1 $\mu$m et 2 $\mu$m.

Une résine photosensible 4, par exemple du type utilisé en microélectronique ou en technologie écrans plats, est ensuite déposée : figure 2A. Cette résine est insolée à travers un masque représentant les parois par un outil de lithographie, comme la photosensibilisation.

On procède ensuite à un développement de la résine 4 selon les techniques typiquement utilisées en microélectronique ou en technologie écrans plats : figure 2B. La partie de la couche de masquage 2 non protégée par de la résine 4 est ensuite gravée, par gravure plasma ou gravure chimique, sèche ou humide, pour obtenir le masque 6 : figure 2C.

Il est à noter que la largeur du masque est un paramètre à considérer en vue de l'obtention d'une paroi de dimensions données du fait de la gravure latérale sous le masque permettant la formation de la concavité. Ainsi, pour obtenir une paroi de 2 $\mu$m de large au sommet, un masque de 4 $\mu$m de large pourra être utilisé; l'optimisation des dimensions relatives dépend des matériaux, de la gravure,....

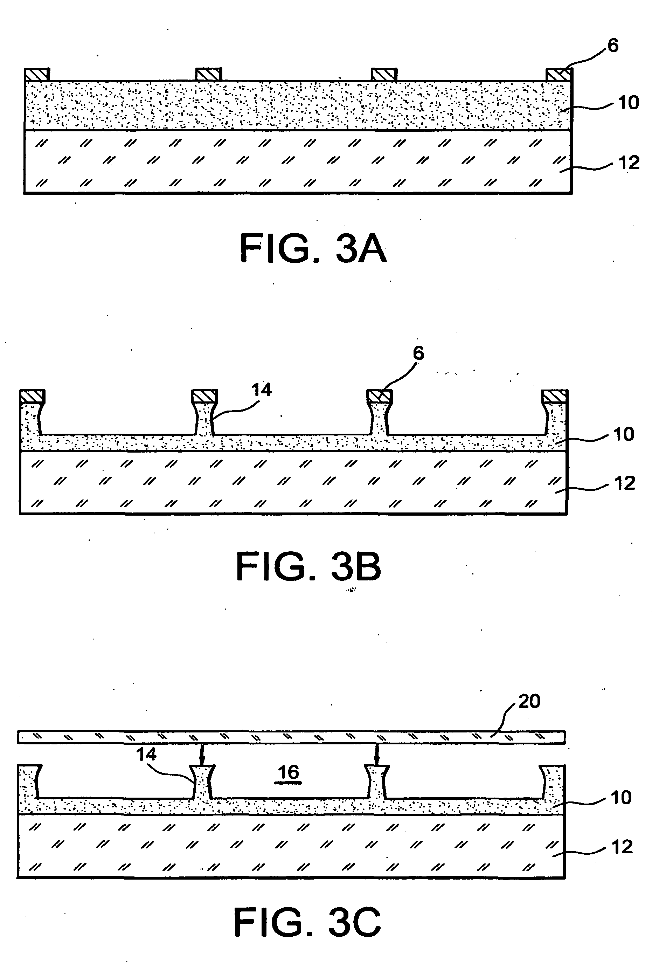

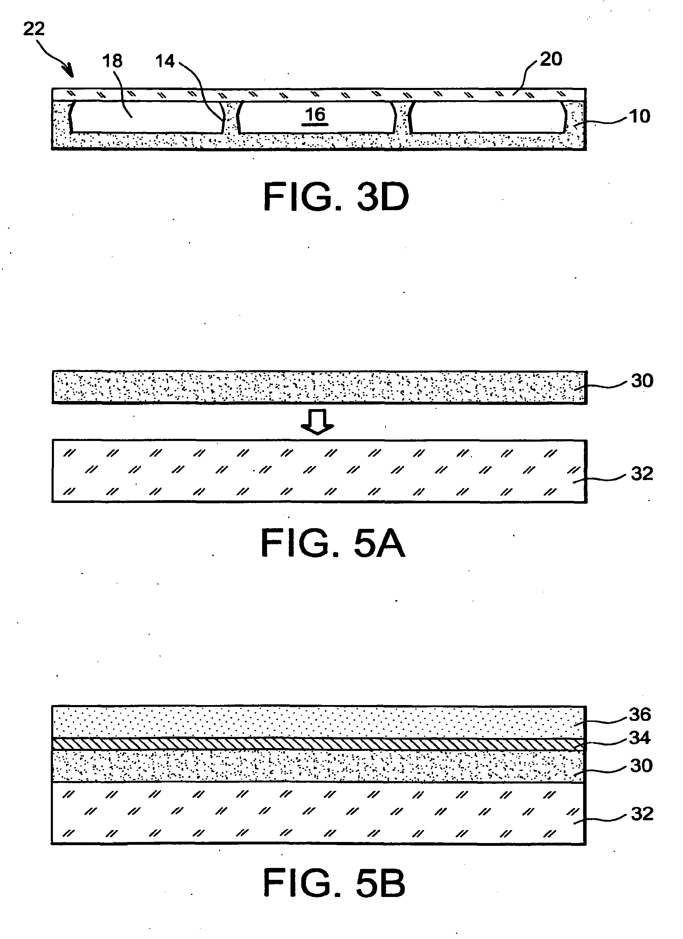

Selon un premier mode de réalisation illustré en figures 3, les cavités du dispositif selon l'invention sont fabriquées au sein d'une couche homogène de matériau, c'est-à-dire que le fond de la cavité et ses parois font partie d'un même élément structurel (la structure ne comporte que cette couche par exemple). Le matériau est sélectionné pour ses qualités optiques, et en particulier il peut être transparent.

Il est usuel que le matériau 10 composant le film ne soit pas particulièrement adapté du fait de son épaisseur et/ou sa souplesse pour les procédés de gravure envisagés : avantageusement, afin de faciliter la manipulation du film et la réalisation du motif et la gravure, la couche de matériau 10 est solidarisée à un support 12 pouvant être traité par des équipements de lithographie et de gravure sèche afin d'assurer à l'ensemble une épaisseur et une rigidité suffisantes. Le support 12 peut ainsi être en verre, en silicium, en quartz, en un polymère,.... L'assemblage peut être réalisé par exemple par collage (figure 3A); le collage présente alors une tenue mécanique suffisante pour les étapes technologiques ultérieures, tout en restant compatible avec un démontage facile.

Un masque 6 est ensuite déposé à la surface de la couche de film 10 opposée au substrat 12; de préférence, le masque 6 est réalisé selon le procédé décrit en rapport avec la figure 2.

Le film transparent 10 est alors gravé au travers du masque 6 sur une profondeur déterminée. La gravure utilisée dans cette étape de la figure 3B peut être une gravure plasma RIE classique ou haute densité avec de l'$O_2$ mélangé ou non avec un gaz fluoré type $SF_6$ et/ou $CHF_3$ dans des conditions adaptées pour avoir une légère isotropie.

La gravure est arrêtée une fois la profondeur atteinte, c'est-à-dire par exemple une fois que des parois 14 de 10 $\mu$m sont obtenues. Tel que présenté plus haut, la détermination des différents paramètres (durée, pression de plasma, nature des gaz,...) permettent d'obtenir le profil souhaité.

Dans une étape facultative, la couche de masquage 6 peut ensuite être supprimée, par exemple par gravure plasma ou gravure chimique : figure 3C. On obtient ainsi un composé dont une des faces est de nature homogène mais présente les irrégularités de surface que sont les parois 14.

Les cavités 16 ainsi obtenues peuvent être remplies d'un fluide 18 approprié et fermées en déposant une autre couche de matériau transparent 20 par-dessus, par exemple par laminage : on obtient ainsi un film 22 selon l'invention, dont les propriétés optiques sont optimisées et comprenant des cavités étanches 16 dans lesquelles du fluide 18 de propriétés optiques sélectionnées est placé : figure 3C. Les cavités 16 peuvent être remplies par tout procédé approprié, par exemple, par trempage, étalements à la tournette ou à la raclette, sérigraphie, ou tout autre technique d'imprimerie.

Pour optimiser le film 22 selon l'invention, il est alors possible de désolidariser la couche 10 du substrat 12, en particulier si le substrat 12 ne possède pas les qualités optiques souhaitées ou pour retrouver les caractéristiques dimensionnelles ou de souplesse du film 10 : figure 3D. La désolidarisation pourra se faire.par exemple par action mécanique (efforts de traction, de cisaillement, insertion d'une lame,...) et/ou chimique.

Par exemple, pour ce premier mode de réalisation, on sélectionne un film 10 souple transparent, de type PET (Poly Ethylène Téréphtalate), d'épaisseur 75 $\mu$m, et on l'enduit d'une couche de colle de type acrylique. Le film 10 est ensuite laminé sur une plaquette silicium 12 ou une dalle en verre.

Une couche de titane 2 de l'ordre de 50 nm est déposée par pulvérisation ou évaporation, puis les parois sont définies par photolithographie à l'aide d'une résine 4 classique mince permettant de définir des motifs 6 de petites tailles (d'environ 2 $\mu$m), par exemple une maille carrée de pas de l'ordre de 10 à 100 $\mu$m, ou une maille aléatoire afin de minimiser les effets optiques associés à un arrangement trop régulier. On procède ensuite à une gravure par plasma RIE, avec du SF$_6$ sous 10 mTorr et 350 W, de la couche de titane 2 non protégé par la résine 4, puis par gravure plasma RIE avec de l'O$_2$ de la couche polymère 10 sur une épaisseur de l'ordre de 10 $\mu$m. La concavité obtenue a une flèche de l'ordre du micron.

Selon le matériau 10 considéré, il se peut que sa gravure plasma génère des filaments sur le fond de la cavité 18, connue également sous le nom « apparition d'herbes » : voir figure 4. De fait, cette herbe 24 peut être gênante pour certaines applications et certains fluides. Selon un mode de réalisation de l'invention, il est proposé de déposer une fine couche dans ce qui sera le fond de cavité 16, qui sera gravée préférentiellement par voie chimique, de façon à éliminer cette herbe 24.

Cette couche peut être avantageusement utilisée aussi comme couche d'arrêt pendant la gravure plasma. Ainsi, il est plus aisé de contrôler la profondeur des cavités. Selon un deuxième mode de réalisation préféré, les parois sont ainsi rapportées sur un film transparent 30 plan ; elles peuvent ou non avoir la même composition que le fond 30.

De manière similaire au premier mode de réalisation, on procède tout d'abord (figure 5A) à un report, par collage, du film transparent 30 sur un support ou substrat 32 pouvant être traité par des équipements de lithographie et de gravure sèche. Le support 32 est par exemple du verre, ou du silicium, ou du quartz, ou du polymère.

Il est ensuite procédé (figure 5B) à un dépôt d'une couche 34 servant à la fois d'arrêt à la gravure plasma et au retrait de l'herbe 24. On choisit pour cette couche 34 un matériau sélectif par rapport à la gravure plasma des parois, par exemple un métal (Al, Ti, Cr,...) ou un alliage (Al/Si, Al/Cu,...) ou une couche transparente en SiO$_2$, ou SiO$_x$, ou SiOC, ou SiN, ou ITO. Ce matériau 34 a par exemple une épaisseur comprise entre 0,05 $\mu$m et 2 $\mu$m, et peut être mis en place par dépôt chimique en phase vapeur CVD, ou pulvérisation, ou évaporation.

La couche 36 dans laquelle les parois seront gravées est ensuite déposée : il s'agit d'un matériau polymère d'indice optique adapté ou absorbant le rayonnement visible, d'épaisseur typique comprise entre 1 $\mu$m et 30 $\mu$m, déposé à la tournette, ou sous forme de spray, ou de film sec, ou par enduction.

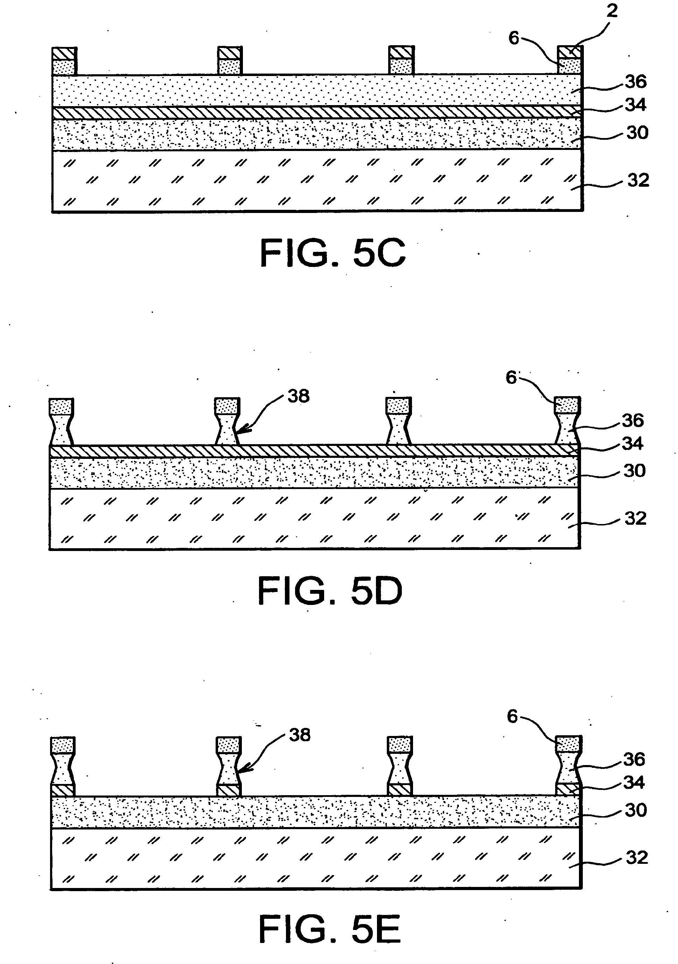

Un masque 6 est ensuite déposé, comme pour le premier mode de réalisation. Sur la figure 5C est représenté un masque issu du procédé tel qu'illustré en figure 2, avec résidu de résine 2 au dessus des motifs du masque 6.

Une gravure plasma de la couche 36 permet ensuite de constituer les parois 38, par gravure plasma RIE classique ou haute densité, avec de l'O$_2$ mélangé ou non avec un gaz fluoré type SF$_6$ et/ou CHF$_3$ dans des conditions adaptées en proportion et en pression pour avoir une légère isotropie. Pendant cette étape, le masque de résine 2 sera lui aussi supprimé (figure 5D). Ici, la gravure se poursuit jusqu'à la couche d'arrêt 34. De même que pour le premier mode de réalisation, la forme incurvée des parois 38 obtenues dépend des paramètres choisis pour la gravure plasma.

Si la couche d'arrêt 34 n'est pas transparente et/ou si des herbes sont présentes, la couche d'arrêt 34 peut être ôtée, par gravure plasma ou gravure chimique (figure 5E). Une gravure de la couche de masquage 6 peut également être réalisée, par exemple par gravure plasma ou par gravure chimique. On note que la profondeur des cavités est alors égale à l'épaisseur de la couche 36, augmentée éventuellement de celle de la couche d'arrêt 34, et donc mieux contrôlée.

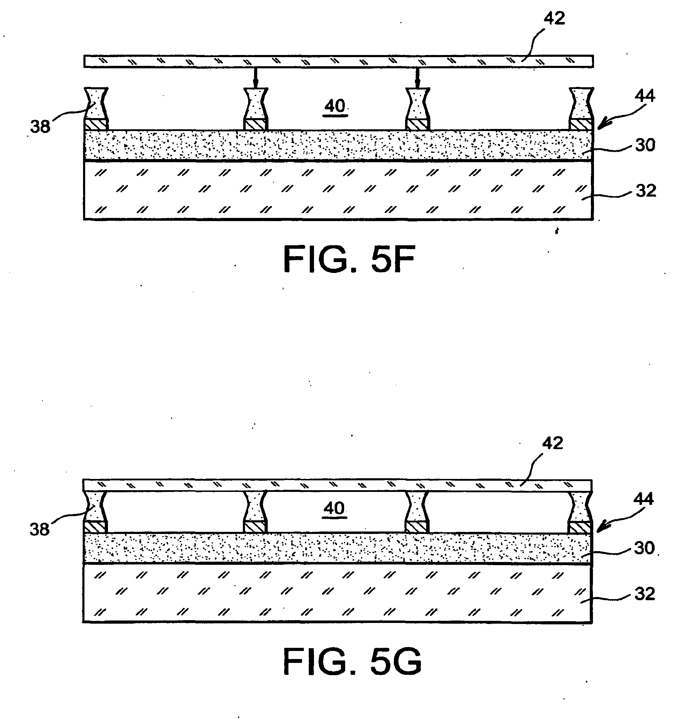

De même que pour le premier mode de réalisation, les cavités 40 peuvent être ensuite remplies et fermées en laminant un autre film transparent 42 par-dessus (figure 5F) ; le dispositif obtenu peut être séparé du substrat 32.

Par exemple, pour fabriquer un film 44 selon la figure 5G, on sélectionne un film 30 souple, transparent, de type PET d'épaisseur 75 $\mu$m, enduit d'une couche de colle de type acrylique, par exemple de 25 $\mu$m d'épaisseur, puis laminé sur une plaquette silicium 32 ou une dalle en verre. Une couche 34 de SiOx ou SiOC, de l'ordre de 50 nm est ensuite déposée par dépôt chimique en phase vapeur par plasma PECVD ou par évaporation.

Un polymère 36 d'indice adapté, d'épaisseur de l'ordre de 5 à 10 $\mu$m, est déposé à la tournette, puis un masque 6 est réalisé tel que précédemment décrit (pulvérisation ou évaporation d'une couche 2 de titane de l'ordre de 50 nm, définition du motif 6 par photolithographie à l'aide d'une résine 4 classique mince, gravure par plasma RIE avec du SF$_6$ de la couche 4 de titane non protégé par la résine 2).

Ensuite, toujours par plasma RIE mais avec de l'O$_2$ (par exemple 50 mTorr et à 350 W), on grave la couche polymère 36 ; la gravure s'arrête sur la couche 34 de SiOx ou SiOC, qui est gravée chimiquement avec une solution fluorhydrique tamponnée comme du BOE. Le métal 6, présent sur les parois 38 des cavités, peut être gravé par voie chimique, avec par exemple du HF dilué.

Les cavités 40 sont remplies en déposant une goutte de liquide photochromique sur le substrat 30 et en l'étalant avec une raclette. Les cavités 40 sont alors scellées en laminant par-dessus un film 42 de PET préencollé.

Bien entendu, ces modes de réalisation ne sont donnés qu'à titre indicatif, et les différentes sélections effectuées peuvent être combinées entre elles pour également faire partie d'un procédé ou d'un dispositif selon l'invention.

**Revendications**

1. Procédé de réalisation d'un film (22, 44) de qualité optique doté de cavités (16, 40) comportant un fluide séparées par des parois (14, 38), ce film comportant en outre un substrat (10, 30), dont une surface définit le fond desdites cavités, les parois ayant une hauteur définie perpendiculairement au substrat, comprenant :

   - la réalisation d'une structure (10, 30-34-36) ayant une première et une deuxième face, et dont l'épaisseur est supérieure à la hauteur des parois ;
   - le dépôt d'un masque (6) représentant le motif des parois (14, 38) sur ladite première face de la structure (10, 30-34-36) ;
   - la gravure de la structure (10, 30-34-36) par la première face à travers le masque (6) sur une épaisseur égale à la hauteur des parois (14, 38), la gravure étant réalisée par plasma de sorte que les parois (14, 38) présentent une forme incurvée vers l'intérieur délimitant des cavités (16, 40) ouvertes sur ladite première face ;
   - le remplissage des cavités (16, 40) par un fluide (18) ;
   - le dépôt sur les parois (14, 38) d'un film (20, 42) fermant les cavités (16, 40), ce film et/ou le substrat étant transparent.

2. Procédé selon la revendication 1 dans lequel la structure (10) est une couche homogène de matériau, les parois (14) étant unitaires avec le fond des cavités (16).

3. Procédé selon la revendication 2 dans lequel le matériau homogène est transparent ou opaque au rayonnement considéré pour les qualités optiques du film (22).

4. Procédé selon la revendication 1 dans lequel la réalisation de la structure comprend le dépôt d'une couche de matériau (34, 36) destinée à former les parois (38) sur un substrat (30), la gravure de la structure comprenant la gravure de la couche de matériau destiné à former les parois (34, 36).

5. Procédé selon la revendication 4 dans lequel le dépôt de la couche de matériau destinée à former les parois comprend le dépôt sur le substrat (30) d'une couche d'arrêt (34) suivi du dépôt sur la couche d'arrêt (34) d'une couche de paroi (36), la gravure du support comprenant la gravure de la couche de paroi (36) par plasma de sorte que les parois (38) présentent une structure arrondie vers l'intérieur.

6. Procédé selon la revendication 5 dans lequel la gravure de la couche de paroi (36) est suivie d'une gravure de la couche d'arrêt (34) jusqu'au substrat (30).

7. Procédé selon l'une des revendications 5 ou 6 dans lequel la couche de paroi (36) est transparente ou absorbe la lumière.

8. Procédé selon l'une des revendications 1 à 7 dans lequel le masque (6) est un masque couche mince réalisé par : dépôt d'une couche de masquage (2), dépôt d'une couche de résine (4), insolation de la résine (4), développement de la résine (4) et gravure de la couche de masquage (2).

9. Procédé selon l'une des revendications 1 à 8 dans lequel le dépôt du film (20, 42) fermant les cavités (16, 40) est effectué par laminage.

10. Procédé selon l'une des revendications 1 à 9 dans lequel la structure (10, 30) est solidarisée à un substrat microtechnologique (12, 32), tel que du silicium ou du verre, pour au moins les différentes étapes de dépôt et gravure.

11. Dispositif optique (22, 44), obtenu avec le procédé selon la revendication 1, comprenant une première couche de matériau (10, 30), une deuxième couche de matériau (20, 42), dont l'une au moins est transparente, et des parois (14, 38) délimitant des cavités (16, 40) entre les première et deuxième couches de matériau, les parois (14, 38) présentent une forme structurée concave de sorte que la partie d'extrémité des parois, adjacente aux première et deuxième couches, est de largeur supérieure à l'épaisseur de la paroi entre ces deux parties d'extrémité.

12. Dispositif selon la revendication 11 dans lequel la première et la deuxième couche sont transparentes, et les cavités (16, 40) forment un ensemble étanche rempli d'un fluide (18) de qualités optiques prédéterminées.

13. Dispositif selon la revendication 12 dans lequel le fluide (18) est photosensible, thermosensible, ou un liquide d'indice optique déterminé.

14. Dispositif selon l'une des revendications 11 à 13 dans lequel les parois (14, 38) comprennent une partie transparente ou absorbant la lumière, et une partie d'extrémité, adjacente à l'une des première et deuxième couches.

**Patentansprüche**

1. Verfahren zum Herstellen eines Films (22, 44) optischer Qualität, der mit Hohlräumen (16, 40) versehen ist, die ein Medium enthalten und durch Wandungen (14, 38) getrennt sind, wobei dieser Film ferner ein Substrat (10, 30) aufweist, von dem eine Fläche den Boden der Hohlräume definiert, wobei die Wandungen eine Höhe haben, die sich senkrecht zum Substrat definiert, umfassend:

   - Herstellen einer Struktur (10, 30 - 34- 36) mit einer ersten und einer zweiten Seite, von welcher die Dicke größer ist als die Höhe der Wandungen;
   - Aufbringen einer Maske (6), die das Muster der Wandungen (14, 38) darstellt, auf die erste Seite der Struktur (10, 30 - 34 - 36);
   - Ätzen der Struktur (10, 30 - 34 - 36) über die erste Seite durch die Maske (6) hindurch über eine Dicke, die gleich der Höhe der Wandungen (14, 38) ist, wobei das Ätzen durch Plasma erfolgt, so dass die Wandungen (14, 38) eine nach innen gebogene Form haben, welche auf der ersten Seite offene Hohlräume (16, 40) eingrenzen;
   - Befüllen der Hohlräume (16, 40) mit einem Medium (18);
   - Aufbringen eines die Hohlräume (16, 40) verschließenden Films (20, 42) auf die Wandungen (14, 38), wobei dieser Film und/oder das Substrat transparent ist/sind.

2. Verfahren nach Anspruch 1, wobei die Struktur (10) eine homogene Materialschicht ist, wobei die Wandungen (14) mit dem Boden der Hohlräume (16) einheitlich ausgeführt sind.

3. Verfahren nach Anspruch 2, wobei das homogene Material transparent oder opak ist gegenüber der für die optischen Eigenschaften des Films (22) betrachteten Strahlung.

4. Verfahren nach Anspruch 1, wobei die Ausbildung der Struktur das Aufbringen einer Materialschicht (34, 36) umfasst, die dazu bestimmt ist, die Wandungen (38) auf einem Substrat (30) zu bilden, wobei das Ätzen der Struktur das Ätzen der Materialschicht umfasst, die zum Ausbilden der Wandungen (34, 36) bestimmt ist.

5. Verfahren nach Anspruch 4, wobei das Aufbringen der Materialschicht, die zum Bilden der Wandungen bestimmt ist, das Aufbringen einer Sperrschicht (34) auf das Substrat (30), gefolgt von dem Aufbringen einer Wandungsschicht (36) auf die Sperrschicht (34) umfasst, wobei das Ätzen des Trägers das Ätzen der Wandungsschicht (36) mit Plasma umfasst, derart, dass die Wandungen (38) eine nach innen abgerundete Struktur aufweisen.

6. Verfahren nach Anspruch 5, wobei dem Ätzen der Wandungsschicht (36) ein Ätzen der Sperrschicht (34) bis zum Substrat (30) folgt.

7. Verfahren nach einem der Ansprüche 5 oder 6, wobei die Wandungsschicht (36) transparent ist bzw. Licht absorbiert.

8. Verfahren nach einem der Ansprüche 1 bis 7, wobei die Maske (6) eine Dünnschichtmaske ist, die hergestellt wird durch Aufbringen einer Maskierungsschicht (2), Aufbringen einer Harzschicht (4), Belichtung des Harzes (4), Entwicklung des Harzes (4) und Ätzen der Maskierungsschicht (2).

9. Verfahren nach einem der Ansprüche 1 bis 8, wobei das Aufbringen des die Hohlräume (16, 40) verschließenden Films (20, 42) durch Laminierung erfolgt.

10. Verfahren nach einem der Ansprüche 1 bis 9, wobei zumindest bei den verschiedenen Schritten des Aufbringens und des Ätzens die Struktur (10, 30) fest mit einem mikrotechnologischen Substrat (12, 32) verbunden wird, wie etwa mit Silicium oder Glas.

11. Optische Vorrichtung (22, 44), die mit dem Verfahren nach Anspruch 1 erhalten wird, enthaltend eine erste Materialschicht (10, 30), eine zweite Materialschicht (20, 42), wovon zumindest eine transparent ist, sowie Wandungen (14, 38), die Hohlräume (16, 40) zwischen der ersten und der zweiten Materialschicht begrenzen, wobei die Wandungen (14, 38) eine konkave, strukturierte Form haben, so dass der an die erste und die zweite Schicht angrenzende Endabschnitt der Wandungen eine Breite hat, die größer als die Dicke der Wandungen zwischen diesen beiden Endabschnitten ist.

12. Vorrichtung nach Anspruch 11, wobei die erste und die zweite Schicht transparent sind und die Hohlräume (16, 40) eine dichte Einheit bilden, die mit einem Medium (18) mit vorbestimmten optischen Eigenschaften befüllt ist.

13. Vorrichtung nach Anspruch 12, wobei das Medium (18) lichtempfindlich, wärmeempfindlich oder eine Flüssigkeit mit bestimmtem optischen Index ist.

14. Vorrichtung nach einem der Ansprüche 11 bis 13, wobei die Wandungen (14, 38) einen transparenten bzw. lichtabsorbierenden Abschnitt und einen Endabschnitt aufweisen, der an eine aus erster bzw. zweiter Schicht angrenzt.

**Claims**

1. Method for forming a film (22, 44) of optical quality provided with cavities (16, 40) comprising a fluid separated by walls (14, 38), said film further comprising a substrate (10, 30) a surface of which defines the bottom of said cavities, the walls having a height defined perpendicularly to the substrate, comprising:

    - the formation of a structure (10, 30-34-36) between a first and a second face, the thickness of which is greater than that of the walls;
    - the deposition of a mask (6) representing the pattern of the walls (14, 38) on a first face of the structure (10, 30-34-36);
    - the etching of the structure (10, 30-34-36) by the first face through the mask (6) over a thickness equal to that of the walls (14, 38), the etching being carried out by plasma so that the walls (14, 38) have a shape curved towards the interior delimiting cavities (16, 40) open onto the first face;
    - the filling of the cavities (16, 40) by a fluid (18);
    - the deposition on the walls (14, 38) of a film (20, 42) sealing the cavities (16, 40), this film and/or the substrate being transparent.

2. Method according to claim 1 wherein the structure (10) is a homogeneous layer of material, the walls (14) being unitary with the base of the cavities (16).

3. Method according to claim 2 wherein the homogeneous material is transparent or opaque to the radiation considered for the optical qualities of the film (22).

4. Method according to claim 1 wherein the formation of the structure comprises the deposition of a layer of material (34, 36) intended to form the walls (38) on a substrate (30), the etching of the structure comprising the etching of the layer of material intended to form the walls (34, 36).

5. Method according to claim 4 wherein the deposition of the layer of material intended to form the walls comprises the deposition on the substrate (30) of a stop layer (34) followed by the deposition on the stop layer (34) of a wall layer (36), the etching of the support comprising the etching of the wall layer (36) by plasma so that the walls (38) have a structure rounded towards the interior.

6. Method according to claim 5 wherein the etching of the wall layer (36) is followed by an etching of the stop layer (34) up to the substrate (30).

7. Method according to one of claims 5 or 6 wherein the wall layer (36) is transparent or absorbs radiation.

8. Method according to one of claims 1 to 7 wherein the mask (6) is a thin film mask formed by: deposition of a masking layer (2), deposition of a layer of resin (4), exposure of the resin (4), development of the resin (4) and etching of the masking layer (2).

9. Method according to one of claims 1 to 8 wherein the deposition of the film (20, 42) sealing the cavities (16, 40) is carried out by laminating.

10. Method according to one of claims 1 to 9 wherein the structure (10, 30) is secured to a microtechnological substrate (12, 32), such as silicon or glass, for at least the different steps of deposition and etching.

11. Optical device (22, 44), obtained through a method according to claim 1, comprising a first layer of material (10, 30), a second layer of material (20, 42), one of which is transparent, and walls (14, 38) delimiting cavities (16, 40) between the first and second layers of material, the walls (14, 38) having a concave structured shape so that the furthest part of the walls, adjacent to the first and second layers, is of width greater than the thickness of the wall between these two furthest parts.

12. Device according to claim 11 wherein the first and the second layers are transparent, and the cavities (16, 40) form a leak tight assembly filled with a fluid (18) of predetermined optical qualities.

13. Device according to claim 12 wherein the fluid (18) is photosensitive, heat sensitive, or a liquid of determined optical index.

14. Device according to one of claims 11 to 13 wherein the walls (14, 38) comprising a transparent or light absorbing part, and a furthest part, adjacent to one of the first and second layers.

FIG. 1A

$e_A$

FIG. 1B

$H$

$e_B$

$\ell$

FIG. 1C

$e_C$

FIG. 2A

FIG. 2B

FIG. 2C

FIG. 4

FIG. 3A

FIG. 3B

FIG. 3C

FIG. 3D

FIG. 5A

FIG. 5B

FIG. 5C

FIG. 5D

FIG. 5E

## FIG. 5F

## FIG. 5G

**EP 1 982 217 B1**

## RÉFÉRENCES CITÉES DANS LA DESCRIPTION

**Documents brevets cités dans la description**

- US 20030076609 A